# EUROPÄISCHE PATENTSCHRIFT

(11) **EP 1 542 917 B1**
(45) Veröffentlichungstag und Bekanntmachung des Hinweises auf die Patenterteilung: **07.05.2008**
(21) Anmeldenummer: 02791575.0
(22) Anmeldetag: 07.11.2002
(51) Int. Cl.: B65G 57/14

(54) **VORRICHTUNG ZUM STAPELN UND ENTSTAPELN VON GEGENSTÄNDEN**
DEVICE FOR STACKING AND UNSTACKING OBJECTS
SYSTEME D'EMPILAGE ET DE DESEMPILAGE D'OBJETS

(30) Priorität: 26.09.2002 AT 14532002
(43) Veröffentlichungstag der Anmeldung: 22.06.2005
(73) Patentinhaber: BM-Battery Machines GmbH, 8273 Ebersdorf (AT)
(72) Erfinder: SCHWETZ, Anton, A-8273 Ebersdorf (AT); ROTBART, Thomas, A-8190 Birkfeld (AT); KURZWEIL, Johann, A-8093 St. Peter am Ottersbach (AT); GRABENHOFER, Helmut, A-8225 Pöllau (AT)
(74) Vertreter: Beer, Manfred
(86) Internationale Anmeldenummer: PCT/AT2002/000313
(87) Internationale Veröffentlichungsnummer: WO 2004/028932

(56) Entgegenhaltungen:
- DE-A- 4 414 001
- US-A- 4 343 583
- US-A- 5 101 956

## Beschreibung

Die Erfindung betrifft eine Vorrichtung mit den Merkmalen des einleitenden Teils von Anspruch 1 (vgl. US-A-5 101 956).

Für den Transport von Gütern, insbesondere im Nahrungsmittelbereich, aber auch im Nichtnahrungsmittelbereich werden im zunehmenden Ausmaß Kunststoffkisten verwendet. Abmessungen von solchen Kisten sind z.B. 600 x 400 x 180 mm. Andere Kistengrößen sind z.B. 400 x 300 x 180 mm.

Es gibt Fälle, insbesondere Postverteilerzentren und Lagerhäuser, wo täglich bis zu 100 000 solcher Kisten ein- und ausgelagert werden. Dies wird in der Regel während der Nachtstunden mit erheblichem Arbeits-, Personal- und Zeitaufwand ausgeführt.

Für gewöhnlich werden die Kistenstapel mit bis zu etwa 2m Höhe angeliefert und müssen zum Beladen einzelner Förderbänder aufgegeben werden. Beim Kommissionieren der Waren kommen die Kisten einzeln aus dem Lager und müssen auftragsbezogen wieder zum Stapeln bis zu 2m Höhe gestapelt werden. Ähnliches gilt für Postverteilerzentren.

Es gibt derzeit keine Anlagen, mit welchen das Stapeln und Entstapeln solcher Kisten möglich ist und die eine Durchsatzrate z.B. mehr als 1.800 Kisten je Stunde möglich machen.

Die bekannten Anlagen können entweder nur stapeln oder nur entstapeln. Vorrichtungen, die sowohl stapeln als auch entstapeln können sind nicht bekannt.

Ein Nachteil der bekannten Vorrichtungen ist es auch, dass das Handhaben der Kisten sehr ruckartig, also mit hohen Beschleunigungsspitzen erfolgt, sodass diese Vorrichtungen insbesondere im Lebensmittelbereich oder beim Transport empfindlicher Güter (Christbaumkugeln) nicht anwendbar sind. Nachteilig ist bei den bekannten Vorrichtungen auch, dass größere Wege zurückgelegt werden müssen.

Bei den bekannten Vorrichtungen zum Stapeln und bei den bekannten Vorrichtungen zum Entstapeln gibt es jedoch ein weiteres Problem. Der Abtransport der abgestellten Kisten muss so schnell erfolgen, dass bei den erforderliche Durchsatzraten bisher ein Beschädigen der Waren nicht immer ausgeschlossen werden kann. Daher sind die bekannten Vorrichtungen auch für einen Durchsatz von maximal 1.800 Kisten je Stunde ausgelegt.

Aus der GB-A-845 211 und aus der EP-B-009 476 sind Vorrichtungen zum Übereinanderstapeln plattenförmiger Gegenstände bekannt. Mit diesen bekannten Vorrichtungen können plattenförmige Gegenstände (Batterieplatten) mit Hilfe eines Stapelrandes zu Stapeln übereinandergeschlichtet werden. Das Stapelrad hat zwei einander gegenüberliegende, sich synchron um eine gemeinsame Achse drehende Träger. An den Trägern sind in den Raum zwischen den Trägern ragende Klauen vorgesehen, die an den zu stapelnden plattenförmigen Gegenständen angreifen. Dabei sind die Klauen an den Trägern verschwenkbar gelagert, sodass sie in eine in dem Raum zwischen den Trägern ragende Lage schwenken können, in der sie an den zu stapelnden Platten angreifen können. Beim Ablegen von Platten auf einem bereit gebildeten Stapel aus mehreren Platten oder einem Träger für so einen Stapel werden die Klauen auflaufen und ausgeschwenkt und legen die Platte auf dem Stapel ab.

Aus der US-A-5 101 956 ist eine Vorrichtung zum Handhaben von Gegenständen, um diese zu einem Stapel zusammenzufügen, mit einem Stapelrad, wobei an dem Stapelrad Aufnahmen für die zu stapelnden Gegenstände angeordnet sind, wobei am Stapelrad mehrere Halteeinrichtungen für einen Gegenstand vorgesehen sind und wobei den Halteeinrichtungen Kuppelmittel zugeordnet sind, mit welchen die Halteeinrichtungen an jeweils einem Gegenstand festlegbar sind, bekannt.

Der Erfindung liegt die Aufgabe zugrunde eine Vorrichtung der eingangs genannten Gattung so weiter zu bilden, dass sie sowohl für das Stapeln als auch für das Entstapeln, insbesondere von Kisten der oben erwähnten Art, einsetzbar ist.

Gelöst wird diese Aufgabe mit einer Vorrichtung, welche die Merkmale von Anspruch 1 aufweist.

Bevorzugte und vorteilhafte Ausgestaltungen der erfindungsgemässen Vorrichtung sind Gegenstand der Unteransprüche.

Die Erfindung beruht auf einer Weiterbildung des an sich bewährten Prinzips von Stapelrädern, das beispielsweise aus der oben erwähnten EP-B-009 476 bekannt ist. Dieses Prinzip bietet den großen Vorteil, dass kurze Wege bei runden Bewegungen möglich sind, sodass die Umfangsgeschwindingkeit auf ein Minimum verringert wird, und die Bewegungen für die Waren, die in den Kisten transportiert werden, schonend ausgeführt werden können.

Durch die erfindungsgemäße Vorrichtung ist es möglich die Durchsatzraten in einer großen Bandbreite zu regeln. Weiters ist möglich, dass alle Geschwindigkeitsbereiche, die von der Fördertechnik gefordert werden (An- und Abtransport der einzelnen Kisten und der Kistenstapel), abgedeckt werden können. Beispielsweise kann in einem Bereich von 100 bis 2800 Kisten je Stunde geregelt werden.

In einer Ausführungsform wird eine weitere Verbesserung des schonenden Transportes der Waren erreicht, und eine Beschädigung der Waren ausgeschlossen, indem die Übergabe von Kisten beim Entstapeln im Bereich knapp nach dem oberen Totpunkt der Bewegung einer Kiste am Stapelrad erfolgt. Dies hat den Vorteil, dass sich die Kiste zu diesem Zeitpunkt überwiegend horizontal bewegt und die vertikale Bewegungskomponente nur klein ist. Dadurch sind nur kleine horizontale Beschleunigungskräfte durch das Abtransportband erforderlich, um die Kiste aus dem Stapelrad zu fördern.

Vorteilhaft in einer Ausführungsform der Erfindung ist es auch, wenn an dem Stapelrad Halteplatten mit mehreren nebeneinander angeordneten Schwenkfingern vorgesehen sind, was es erlaubt, dass Kisten entstapelt oder gestapelt werden, bei denen die Aufnahmepunkte nicht identisch sind. Dies gibt den Vorteil, dass auch bei verschieden großen Kisten, ein kontinuierlicher Betrieb der Anlage ohne Umstellarbeiten möglich ist.

Die Steuerung der die Kisten haltenden Schwenkfinger erfolgt mit Hilfe von Auflaufblechen, die gewährleisten, dass die Schwenkfinger rechtzeitig in ihre bzw. aus ihrer Wirkstellung bewegt werden, was weiters den Vorteil hat, dass auch gesichert ist, dass die Schwenkfinger den Abtransport von Kisten durch das Förderband nicht behindern.

Auch eine Beschädigung der Kisten ist bei dieser Ausführungsform ausgeschlossen. Durch die Auflauf- bzw. Steuerbleche werden die Schwenkfinger solange zurückgehalten bis die nächste Kiste in Aufnahmeposition ist.

Mit Vorteil ist die erfindungsgemäße Vorrichtung mit einer Stapelvorrichtung mit wenigstens einem Hebetisch kombiniert. So wird gewährleistet, dass die jeweils oberste Kiste eines Stapels, aus dem Kisten zu entstapeln sind in Entnahmeposition angeordnet ist.

Das Vorsehen von Hebetischen hat auch den Vorteil, dass beim Entstapeln ein weiterer Stapel auch dann schon in die Vorrichtung eingeführt werden kann, wenn sich auf dem Hebetisch noch zu entstapelnde Kisten befinden. Sobald der obere Stapel durch Entstapeln von Kisten abgebaut worden ist, wird der bereits eingeschobene Stapel soweit angehoben, dass das Entstapeln ohne Unterbrechung weiter ausgeführt werden kann. Besonders vorteilhaft ist eine Ausführungsform mit zwei Hebetischen. Nach dem Beginn des Entstapelns eines angehobenen Stapels wird der untere Hebetisch nach unten bewegt und übernimmt noch während des Entstapelvorganges von Kisten aus einem auf einem oberen Hebetisch stehenden Stapel, einen unteren Kistenstapel. Sobald dieser Kistenstapel an den oberen Hebetisch übergeben worden ist, wird der untere Hebetisch in Ausgangsstellung zurückbewegt und erwartet den Antransport des nächsten Stapels. Es ist also bei der erfindungsgemäßen Vorrichtung zum Zuführen von Stapeln mit Vorteil eine Kombination aus zwei Hebevorrichtungen, z. B. in Form von Hebetischen, vorgesehen, die miteinander kombiniert in der Weise arbeiten, dass die untere Hebevorrichtung einen Stapel anhebt und diesen an eine obere Hebevorrichtung übergibt, sobald in dieser keine Kisten mehr gestapelt sind.

Hinzuweisen ist noch darauf, dass wenngleich die Vorrichtung eingangs und im nachfolgenden Ausführungsbeispiel, am Beispiel für das Stapeln und Entstapeln von Kisten erläutert, und beschrieben worden ist, bzw. werden wird, die erfindungsgemäße Vorrichtung grundsätzlich für das Entstapeln und Stapeln beliebiger Gegenstände geeignet ist. Es können auch andere Bauteile, wie z.B. Gehäuseteile, die gestapelt antransportiert werden, für eine weiter Be- oder Verarbeitung entstapelt werden. In ähnlicher Weise können fertige Bauteile durch die erfindungsgemäße Vorrichtung gestapelt werden.

Bevorzugtes Einsatzgebiet ist aber das Stapeln und Entstapeln von Kisten, die für den Transport von Waren gedacht sind.

Weitere Einzelheiten, Vorteile und Merkmale der Erfindung ergeben sich aus der nachfolgenden Beschreibung eines Beispiels für eine Vorrichtung gemäß der Erfindung, die in diesem Beispiel für das Stapeln und Entstapeln von Kisten ausgelegt ist.

Es zeigt:
Fig. 1 in Schrägansicht eine erfindungsgemäße Vorrichtung zum Stapeln und Entstapeln,
Fig. 2 die Vorrichtung aus Fig. 1 in anderer Ansicht,
Fig. 3 in vergrößertem Maßstab ein Stapelrad,
Fig. 4 unter Weglassen einzelner Teile nochmals das Stapelrad mit dazugehörender Hebevorrichtung für entstapelte Kisten,

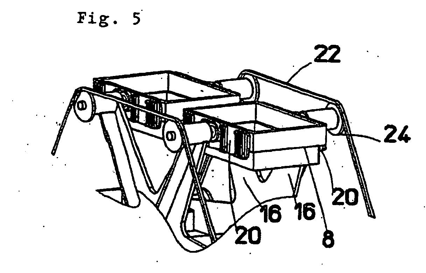

Fig. 5 ein Detail der Haltevorrichtung für Kisten am Stapelrad,
Fig. 6 die Zuordnung der Steuerscheibe zum Stapelrad,
Fig. 7 in vergrößertem Maßstab einen Schwenkfinger an dem Halterteil des Stapelrades in seiner Wirkstellung,
Fig. 8 den Schwenkfinger aus Fig. 7 in seiner Bereitschaftstellung,
Fig. 9 Einzelheiten des Schwenkfingers,
Fig. 10 eine den Schwenkfinger enthaltene Baueinheit und
Fig. 11 die Bewegungs-Geometrie eines Schwenkfingers.

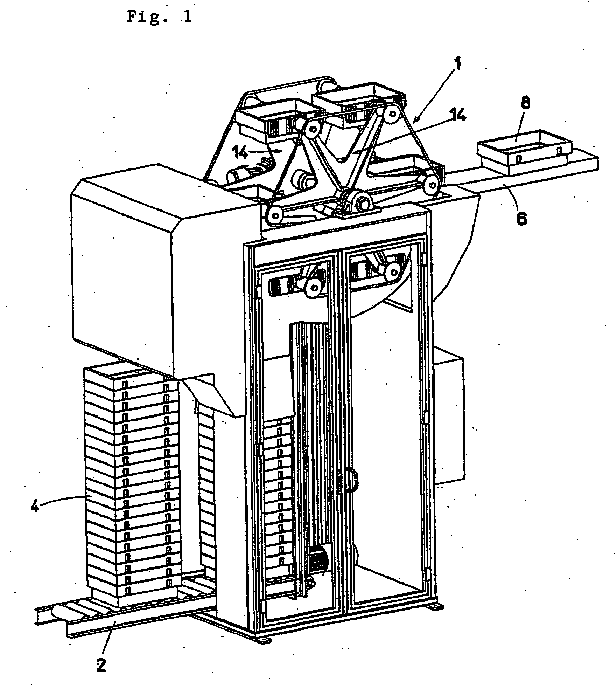

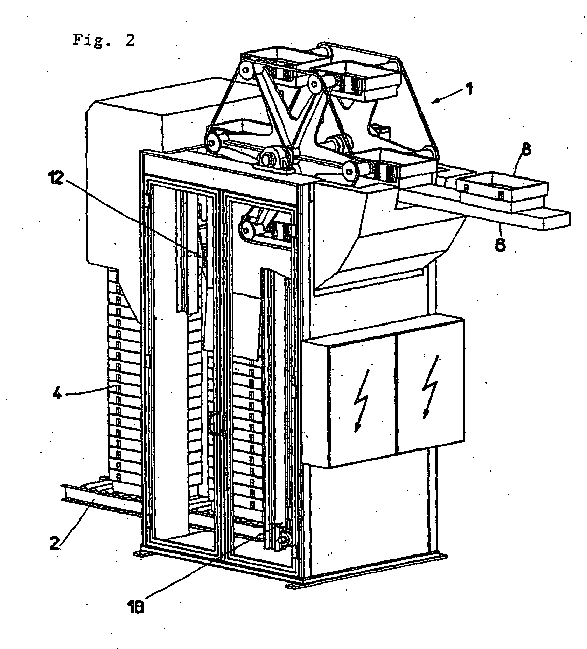

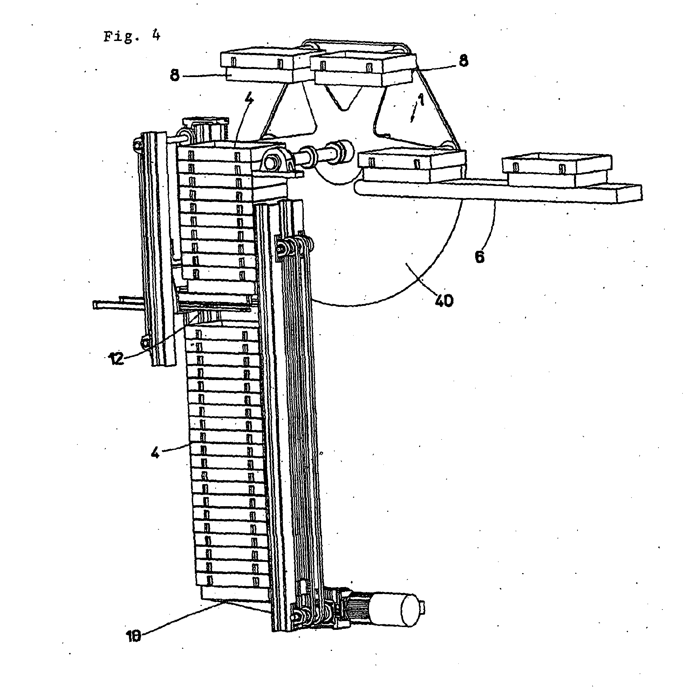

In dem in den Fig. 1 und 2 gezeigten Ausführungsbeispiel ist die erfindungsgemäße Vorrichtung mit ihrem Stapelrad 1 zwischen einem Förderband 2 für das An- bzw. Abtransportieren von Kistenstapeln 4 einerseits und einer Fördervorrichtung 6 für den An- bzw. Abtransport einzelner Kisten 8 anderseits angeordnet. Die Vorrichtung besitzt neben dem später noch in mehr Einzelheiten zu beschreibenden Stapelrad 1 am Ende des Förderers 2 für das Zuführen bzw. den Abtransport von Kistenstapeln 4 zwei alternierend arbeitende Hebevorrichtungen (Fig. 2 und 4) für das Anheben von Kistenstapeln 4 soweit, dass die oberste Kiste des Kistenstapels 4 jeweils in Entnahmestellung angeordnet ist.

Insoweit ist auch darauf hinzuweisen, dass das Förderband 6 für die vereinzelten Kisten 8 bei dem Ausführungsbeispiel in der Höhe der Achse des Stapelrades 1 angeordnet ist, dass dieses aber auch höher angeordnet sein kann, um Kisten 8 knapp nach dem oberen Totpunkt der Bewegung von Kisten 8 übernehmen.

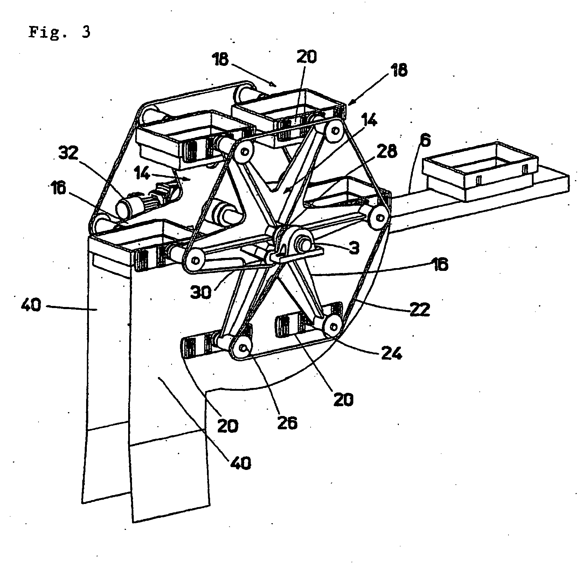

Fig. 3 zeigt das, dass Stapelrad 1 aus zwei spiegelbildlich angeordneten, im wesentlichen sternförmigen Scheiben 14 besteht, wobei an jedem der sechs Arme 16 jedes Sterns 14 Halterungen 18 für Kisten 8 vorgesehen sind. Die Halterungen 18 besitzen an den Enden der Arme 16 der Sterne 14 gelagerte Halteplatten 20. Die Haltplatten 20 sind über Achsen 26 mit Rädern 24 verbunden. Je Scheibe 14 sind die Räder 26 jedes Armes 16 mittels eines Endlosgliedes 22 miteinander und mit einem zur Drehachse 3 des Stapelrades 1 koaxial angeordneten, jedoch gestellfesten, also sich mit dem Stapelrad 1 nicht drehenden Rad 28 verbunden. Um das Endlosglied 22 zu spannen ist eine Spannrolle 30 vorgesehen, die an einem Arm eines Sternrades angeordnet ist.

Zusätzlich ist ein Antriebsmotor 32 vorgesehen um das Stapelrad 1 in Drehung zu versetzen.

Durch diese Konstruktion ist gewährleistet, dass die an jedem Arm 16 des Armsternes 14 vorgesehene Halteplatten 20 auch dann stets horizontal ausgerichtet bleibt, wenn das Stapelrad 1 durch den Antriebsmotor 32 in Drehung um seine Achse 3 gesetzt wird.

An der Seite der Vorrichtung, an der Kistenstapel 4 zugeführt werden, sind zwei Hebetische 10,12 vorgesehen. Der eine Hebetisch 10, hat seine untere Endstellung in der Höhe des Endes des Förderers 2. Der zweite Hebetisch 12 (Fig. 4) ist dazu vorgesehen, einen vom ersten Hebetisch 10 angehobenen Stapel 4 zu übernehmen und jeweils in die Position zu bewegen, in der die jeweils oberste Kiste 8 entnommen wird. Hiezu ist wenigstens ein Sensor vorgesehen, der die oberste Kiste 8 erfasst, und die Bewegungen des zweiten Hebetisches 12 so steuert, dass die jeweils oberste Kiste 8 die für das Abnehmen vom oder Aufsetzen auf den Stapel 4 richtige Lage zum Stapelrad 1 einnimmt.

Wenn der vom zweiten Hebetisch 12 (dem oberen Hebetisch) gehobene Kistenstapel 4 entstapelt worden ist, also auf dem zweiten Hebetisch 12 keine Kiste mehr steht, wird vom ersten (unteren) Hebetisch 10 ein Kistenstapel 4 soweit angehoben, dass er vom zweiten Hebetisch 12 übernommen werden kann, so dass beim Entstapeln eine im wesentlichen kontinuierliche Arbeitsweise möglich ist.

Beim Stapeln von Kisten 8, die von dem anderen Förderer 6 einzeln zugeführt werden, arbeitet die Hebevorrichtung mit ihren zwei Hebetischen 10,12 für Stapel sinngemäß umgekehrt.

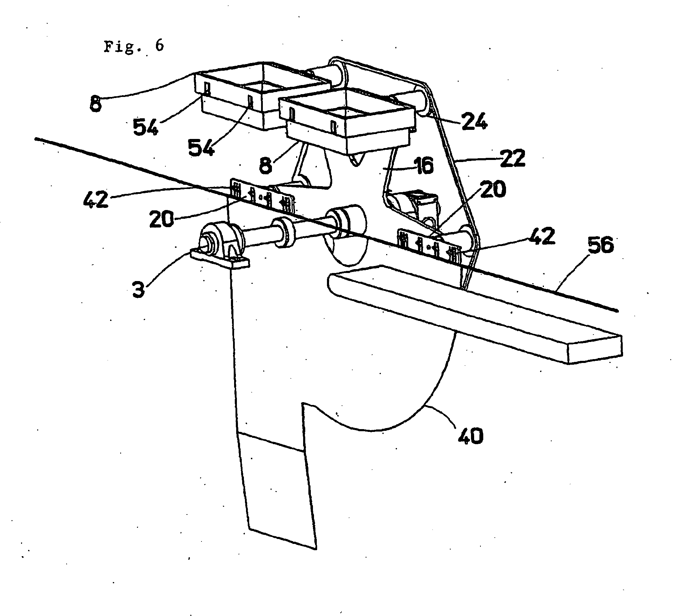

Insbesondere aus den Fig. 4 und 6 ist zu entnehmen, dass knapp innerhalb jedes Radsternes 14 des Stapelrades 1 je eine Steuerplatte 40 vorgesehen ist, die als Seitenführung und als Steuerung für die Betätigung von an den Halteplatten 20 vorgesehenen Schwenkfingern 42 (Fig. 6) dienen.

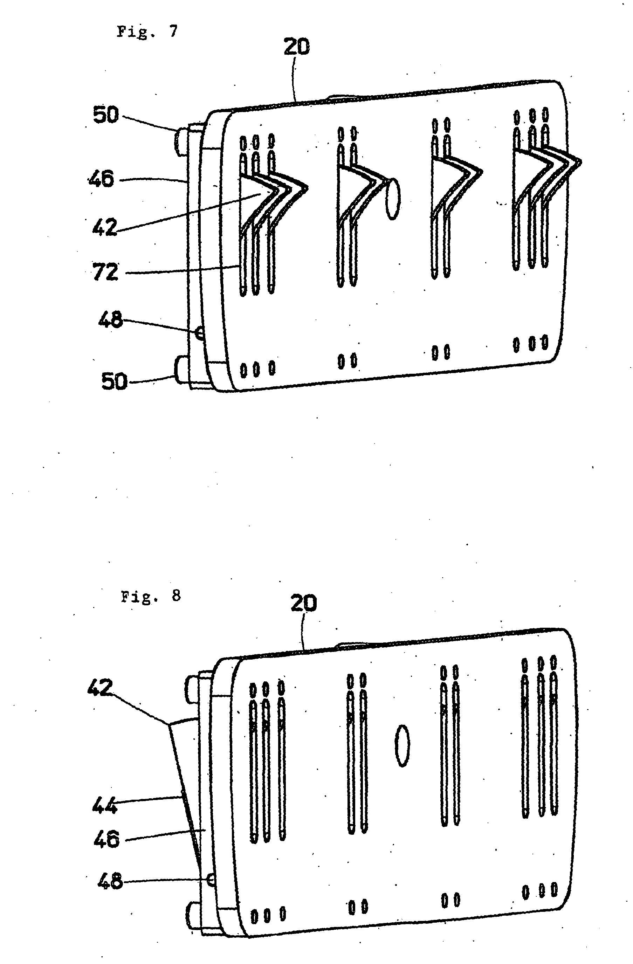

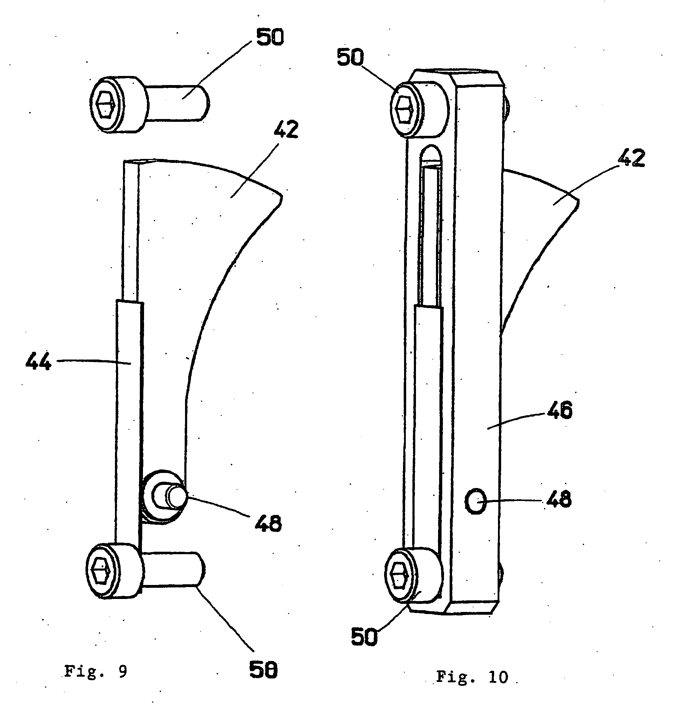

Die Schwenkfinger 42 an den Halteplatten 20 sind aus einer Wirkstellung (Fig. 7), in der sie in den Raum zwischen den beiden Radsternen 14 ragen, in eine nicht wirksame Stellung (Fig. 8) zurückschwenkbar. Dabei ist wie in Fig. 9 und 10 gezeigt, jedem /Schwenkfinger 42 eine Blattfeder 44 zugeordnet, die den Schwenkfinger 42 in seine Wirkstellung gemäß Fig. 7 belastet.

Die Schwenkfinger 42 sind in Kassetten 46 aufgenommen, und in diesen über Zylinderstifte 48 verschwenkbar gelagert. Die Kassetten 46 werden mit Hilfe von zwei Schrauben 50 an den Halteplatten 20 des Stapelrades 1 befestigt. Durch eine der beiden Schrauben 50 wird auch die Blattfeder 44 in ihrer in Fig. 9 und 10 gezeigten Stellung gehalten.

Wie beispielsweise Fig. 6 zeigt sind an jeder Halteplatte 20 mehrere Schwenkfinger 42 vorgesehen, sodass jede Halteplatte 20 für unterschiedlich große bzw. mit unterschiedlicher Anordnung von seitlichen Aufnahmeöffnungen 54 für die Schwenkfinger 42 ausgestattete Kisten 8 geeignet ist.

Auf diese Art und Weise ist gewährleistet, dass die Schwenkfinger 42 der Halteplatten 20, die sich ausserhalb der Seitenführungsplatten (Steuerplatten 40) befinden, in ihre Wirkstellung gemäß Fig. 7 ausgeschwenkt sind, wogegen die Haltefinger 42 aller Halteplatten 20, die im Bereich der Seitenführungsplatten 40 angeordnet sind, in die in Fig. 8 gezeigte Stellung zurückbewegt sind.

So hat man es in der Hand durch Wahl und Anordnung der An- bzw. Auslaufkante 56 (oberer Rand der Steuerplatten 40) den Zeitpunkt und Ort zu bestimmen, wann die Schwenkfinger 42 ein- bzw. ausgeklappt werden.

Durch die ausgeklappten Schwenkfinger 42 werden Kisten 8 einzeln erfasst und am Beispiel des Entstapelns von Kisten 8 vom Ende des vom zweiten Hebetisch 12 gehobenen Stapels 4 abgehoben und von dem sich bei Betrachten der Fig. 2 im Uhrzeigersinn drehenden Stapelrad 1 bewegt, bis sie auf das Auslaufförderband 6 vereinzelt abgesetzt werden. Dabei ist die Anordnung der An- bzw. Auslaufkante 56 der Seitenführung (Steuerplatten 40) so gewählt, dass die Schwenkfinger 42 in ihre Wirkstellung gemäß Fig. 7 ausklappen, wenn die Halteplatte 20, an der sie vorgesehen sind, im Bereich einer zu entstapelnden Kiste 8 angeordnet ist. Das bedeutet, dass die als Haltefinger für Kisten 8 dienenden Schwenkfinger 42 darunter liegende Kisten des Stapels 4 nicht berühren, da diese zwischen den Seitenführungsplatten 40 angeordnet sind.

Eine solche Anordnung der An- bzw. Auslaufkante 56 an den Seitenführungen 40 stellt auch sicher, dass sich die Schwenkfinger 42 von den Kisten 8 lösen, wenn diese auf dem Auslaufförderband 6 vereinzelt abgestellt worden sind.

Sinngemäß werden die Schwenkfinger 42 in- bzw. aus ihrer Wirklage bewegt, wenn die erfindungsmäßige Vorrichtung zum Stapeln von durch das Förderband 6 einzeln zugeführten Kisten 8 verwendet wird. In diesem Fall dreht sich das Stapelrad 1 (in Fig. 1 und 2) entgegen dem Uhrzeigersinn.

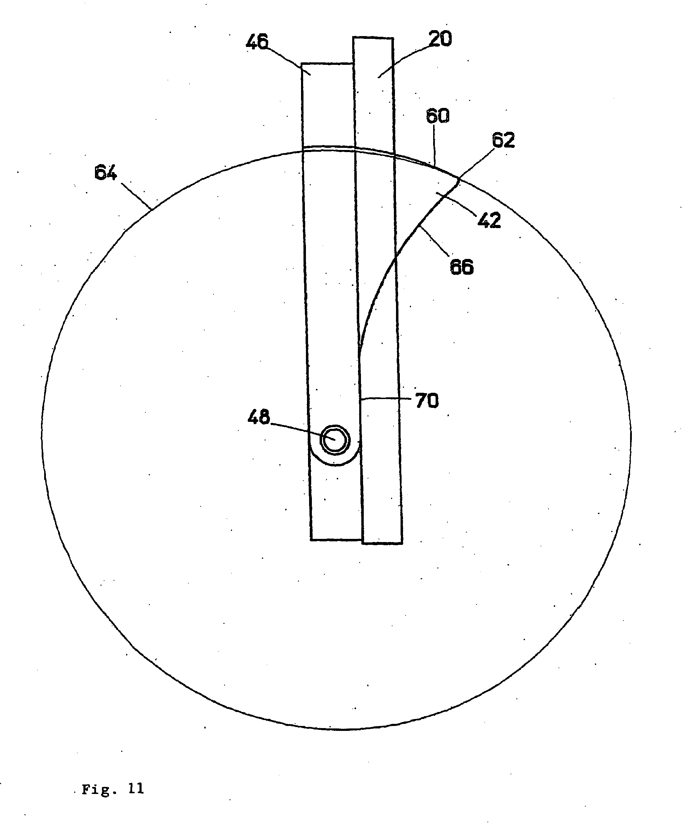

Die Geometrie der Schwenkfinger ist in Fig. 11 nochmals dargestellt, daraus ist ersichtlich, dass die obere Endfläche 60 der Schwenkfinger 42, welche an den Kisten 8 in die Anlage kommt, eine Teilzylinderfläche ist so, dass sich also der vorderste Punkt 62 jedes Schwenkfingers 42 entlang einer Teil-Kreisbahn 64 bewegt und sich so eine Einfahrkurve ergibt, die beim Einklappen einen Klemmeffekt verhindert. Auch die nach unten weisende Flächen 66 der Schwenkfinger 42, also die Fläche, die mit der An- bzw. Auslaufkante 56 der Seitenführungen 40 in Berührung kommt, um den Schwenkfinger 42 aus der in Fig. 11 bzw. Fig. 7 gezeigten Stellung in die in Fig. 8 gezeigten Bereitschaftslage zurückzuschwenken, ist gekrümmt ausgebildet, sodass sich eine problemlose Bewegung dieser als Steuerkante dienenden Fläche 66 relativ zur An- bzw. Auslaufkante 56 ergibt.

Aus Fig. 11 ist noch ersichtlich, dass in der Kassette 46, in der die Schwenkfinger 42 gelagert sind noch eine Platte 70 vorgesehen ist, welche verhindert, dass die Schwenkfinger 42 weiter als die in Fig. 11 bzw. 7 gezeigte Stellung ausschwenken. Jede andere Art der Begrenzung der Schwenkbarkeit der Schwenkfinger 42, beispielsweise durch entsprechende Formgebung der Schlitze 72 in den Halteplatten 20, ist ebenfalls denkbar.

Auf diese Weise ist gewährleistet, dass die Schwenkfinger 42, die als Abnahmefinger dienen, in die Aufnahmeöffnungen 54 in den Seitenflächen der zu stapelnden bzw. zu entstapelnden Kisten 8 sicher eingreifen, wenn diese von einem Stapel 4 zum Vereinzeln, also Entstapeln entnommen werden, bzw. umgekehrt zu einem Stapel 4 übereinandergesetzt werden.

Es ist ersichtlich, dass mit der erfindungsmäßigen Vorrichtung die in modernen Logistiksystemen immer häufiger benützten Mehrwegkisten, in welchen Waren transportiert, gelagert oder kommissioniert werden, gestapelt und entstapelt werden können. Mit der als modular aufgebauter Kistenmanipulator ausgebildeten Vorrichtung der Erfindung kann in Anlagen für Kisten mit einer Größe von 600 x 400 mm oder 400 x 300 mm gestapelt und entstapelt werden. Mit Hilfe der erfindungsgemäßen Vorrichtung kann dank des Stapelrades eine sehr hohe Durchsatzrate bei einer gleichzeitig niedriger Umfangsgeschwindigkeit erreicht werden. Auch sind durch das Stapelrad kurze Fahrwege zwischen den Zyklen gegeben. So können Kisten mit Abmessungen von 600 x 400 mm beispielsweise in Stückzahl bis zu 2.500 Stk. je Stunde und kleiner Kisten ( 400 x 300 mm) mit Stückzahl bis zu 5.000 Stk. je Stunde gestapelt bzw. entstapelt werden.

Zusammenfassend kann ein Ausführungsbeispiel der Erfindung wie folgt dargestellt werden:

Eine Vorrichtung zum Handhaben von Gegenständen, insbesondere Kisten 8, besitzt um die Gegenstände zu Stapeln oder aus einem Stapel 4 zu vereinzeln, besitzt ein Stapelrad 1, das zwischen einer Hebeeinrichtung 10,12 für Stapel 4 aus Gegenständen 8 und einer Fördereinrichtung 6 für Gegenstände 8 angeordnet ist. Beim Drehen des Stapelrades 1 wird je nach dessen Drehrichtung ein Gegenstand 8 von der Fördereinrichtung 6 auf den Stapel 4 in der Heberichtung 10,12 umgesetzt oder umgekehrt. Das Stapelrad 1 trägt über seinen Umfang verteilt, Paare von Halteplatten 20, an denen Schwenkfinger 42 gelagert sind. Die Schwenkfinger 42 werden von Federn 44 in ihre Wirkstellung gedrückt, in der sie über die einander zugewendeten Flächen der Halteplatten 20 vorstehen und in Aufnahmeöffnungen 54 der Gegenstände 8 eingreifen, wenn Gegenstände 8 vom Stapelrad 1 umgesetzt werden. Dem Stapelrad 1 sind Steuerplatten 40 zugeordnet, die mit ihren Auflaufkanten 56 an nach unten weisenden, konkaven Flächen 66 der Schwenkfinger 42 angreifen, um diese in ihre über die Haltplatten 20 nach innen nicht vorstehende Bereitschaftsstellung zu schwenken. Die nach oben weisenden Flächen 60 der Schwenkfinger 42, auf welchen die Aufnahmeöffnungen 54 der Gegenstände 8 aufsitzen, sind konvex gekrümmte Teilzylindermantelflächen. Mit dieser Vorrichtung ist bei hohen Arbeitsgeschwindigkeiten ein schonendes Handhaben der Gegenstände möglich, was insbesondere bei mit empfindlichen Waren gefüllten Kisten 8 von Vorteil ist.

## Patentansprüche

1. Vorrichtung zum Handhaben von Gegenständen (8), um diese aus einem Stapel (4) zu vereinzeln, oder zu einem Stapel (4) zusammenzufügen, mit einem Stapelrad (1), dem das Ende eines Stapels (4) der Gegenstände (8) und eine Zuführ- bzw. Abführvorrichtung (6) für einzelne Gegenstände (8) zugeordnet ist, und mit an dem Stapelrad (1) angeordneten Halterungen (18) zum Stapeln bzw. Entstapeln der Gegenstände (8), wobei die Halterungen (18) Halteplatten (20) umfassen und wobei den Halteplatten (20) Kuppelmittel (42) zugeordnet sind, mit welchen die Halteplatten (20) an jeweils einem Gegenstand (8) festlegbar sind,
**dadurch gekennzeichnet, dass** mit den Halteplatten (20) Rollen (24) drehfest verbunden sind, wobei über alle Rollen (24) ein Endlosglied (22) gelegt ist, das auch über eine gestellfeste, zur Drehachse (3) des Stapelrades (1) koaxiale Rolle (28) gelegt ist.

2. Vorrichtung nach Anspruch 1, **dadurch gekennzeichnet, dass** an jeder Halteplatte (20) als Kuppelmittel wenigstens zwei Schwenkfinger (42) verschwenkbar gelagert sind.

3. Vorrichtung nach Anspruch 1 oder 2, **dadurch gekennzeichnet, dass** das Stapelrad (1) aus zwei, insbesondere sternförmig ausgebildeten, Platten (14) besteht, wobei die Halteplatten (20) am Außenumfang des Stapelrades (1) drehbar gelagert sind.

4. Vorrichtung nach Anspruch 3, **dadurch gekennzeichnet, dass** je eine Halteplatte (20) am Ende jedes Sternarmes (16) der Platten (14) drehbar gelagert sind.

5. Vorrichtung nach Anspruch 1, **dadurch gekennzeichnet, dass** dem Endlosglied (22) eine mit dem Stapelrad (1) umlaufende Spannrolle (30) zugeordnet ist.

6. Vorrichtung nach Anspruch 3 oder 4, **dadurch gekennzeichnet, dass** den Rollen (24) bezüglich der Sternarme (16) gegenüberliegend je eine Halteplatte (20)vorgesehen ist.

7. Vorrichtung nach einem der Ansprüche 1 bis 6, **dadurch gekennzeichnet, dass** dem Stapelrad (1) wenigstens eine Hebevorrichtung (10,12) für Stapel (4) von Gegenständen (8) zugeordnet ist.

8. Vorrichtung nach Anspruch 7, **dadurch gekennzeichnet, dass** die Hebevorrichtung zwei Hebetische (10,12)aufweist.

9. Vorrichtung nach einem der Ansprüche 1 bis 8, **dadurch gekennzeichnet, dass** die Zuführ- bzw. Abführvorrichtung (6) für das Zuführen sowie Abführen vereinzelter Gegenstände (8) dem Stapelrad (1) mit seinem Ende in der Nähe dessen oberen Totpunktes zugeordnet ist.

10. Vorrichtung nach einem der Ansprüche 1 bis 9, **dadurch gekennzeichnet, dass** für die Betätigung der Kuppelmittel (42) Steuerplatten (40) vorgesehen sind.

11. Vorrichtung nach einem der Ansprüche 1 bis 10, **dadurch gekennzeichnet, dass** die Kuppelmittel an den Halteplatten (20) gelagerte Schwenkfinger (42) sind.

12. Vorrichtung nach Anspruch 11, **dadurch gekennzeichnet, dass** die für die Steuerung der Schwenkfinger (42) vorgesehenen Platten (40) Auflaufkanten (56) besitzen, die einerseits im Bereich des Endes der Zuführ- bzw. Abführvorrichtung (6) für vereinzelte Gegenstände (8) und anderseits im Bereich des oberen Endes eines Stapels (4) von Gegenständen (8) angeordnet sind.

13. Vorrichtung nach Anspruch 11 oder 12, **dadurch gekennzeichnet, dass** die in ihrer Wirkstellung in Aufnahmeöffnungen (54) an den Seitenflächen der zu handhabenden Gegenstände (8) eingreifenden Schwenkfinger (42) durch Federn (44) belastet sind.

14. Vorrichtung nach einem der Ansprüche 11 bis 13, **dadurch gekennzeichnet, dass** Anschläge (70) vorgesehen sind, welche das Schwenken der Schwenkfinger (42) in ihre wirkstellung begrenzen.

15. Vorrichtung nach einem der Ansprüche 11 bis 14, **dadurch gekennzeichnet, dass** die nach oben weisenden Endflächen (60) der Schwenkfinger (42) Teilflächen von Zylindermänteln sind.

16. Vorrichtung nach einem der Ansprüche 11 bis 15, **dadurch gekennzeichnet, dass** die nach unten weisenden Flächen (66) der Schwenkfinger (42) konkav gekrümmt sind.

17. Vorrichtung nach einem der Ansprüche 11 bis 16, **dadurch gekennzeichnet, dass** die Schwenkfinger (42) in Kassetten (46) schwenkbar gelagert sind, die an der Außenseite der Halteplatten (20) befestigt sind.

## Claims

1. Device for handling items (8) in order to separate said items from a stack (4) or to assemble them to form a stack (4), comprising a paddle wheel (1) with which the end of a stack (4) of items (8) and a feed or take-off device (6) for individual items (8) are associated, and comprising supports (18) arranged on the paddle wheel (1) for stacking or unstacking the items (8), the supports (18) comprising support plates (20), and coupling means (42) being associated with the holding plates (22), with which coupling means the support plates (20) can each be secured to an item (8), **characterised in that** rollers (24) are rotationally engaged with the support plates (20), a continuous member (22) being laid over all of the rollers (24) and also being laid over a roller (28) which is fixed to the frame and is coaxial with the axis of rotation (3) of the paddle wheel (1).

2. Device according to claim 1, **characterised in that** at least two pivot fingers (42) as the coupling means are pivotably mounted on each support plate (20).

3. Device according to either claim 1 or claim 2, **characterised in that** the paddle wheel (1) is composed of two, in particular star-shaped, plates (14), the support plates (20) being rotatably mounted at the outer periphery of the paddle wheel (1).

4. Device according to claim 3, **characterised in that** a support plate (20) is rotatably mounted at the end of each star arm (16) of the plates (14).

5. Device according to claim 1, **characterised in that** a tension roller (30) which revolves with the paddle wheel (1) is associated with the continuous member (22).

6. Device according to either claim 3 or claim 4, **characterised in that** a support plate (20) is provided opposite each of the rollers (24) relative to the star arms (16).

7. Device according to any of claims 1 to 6, **characterised in that** at least one device (10, 12) for lifting stacks (4) of items (8) is associated with the paddle wheel (1).

8. Device according to claim 7, **characterised in that** the lifting device comprises two lifting tables (10, 12).

9. Device according to any one of claims 1 to 8, **characterised in that** the end, in the vicinity of the top dead centre of the paddle wheel, of the feed or take-off device (6) for feeding or taking-off individual items (8), is associated with the paddle wheel (1).

10. Device according to any one of claims 1 to 9, **characterised in that** control plates (40) are provided for actuating the coupling means (42).

11. Device according to any one of claims 1 to 10, **characterised in that** the coupling means are pivot fingers (42) mounted on the support plates (20).

12. Device according to claim 11, **characterised in that** the plates (40) provided for controlling the pivot fingers (42) comprise run-on edges (56) which are arranged on the one hand in the region of the end of the device (6) for feeding or taking-off individual items (8), and, on the other hand in the region of the upper end of a stack (4) of items (8).

13. Device according to either claim 11 or claim 12, **characterised in that** the pivot fingers (42), which engage, in the operational position thereof, in receiving openings (54) on the side surfaces of the items (8) to be handled, are loaded by springs (44).

14. Device according to any one of claims 11 to 13, **characterised in that** stops (70) are provided which delimit the pivoting of the pivot fingers (42) in the operational position thereof.

15. Device according to any one of claims 11 to 14, **characterised in that** the upward-pointing end faces (60) of the pivot fingers (42) are partial surfaces of cylinder jackets.

16. Device according to any one of claims 11 to 15, **characterised in that** the downward-facing surfaces (66) of the pivot fingers (42) have a concave curvature.

17. Device according to any one of claims 11 to 16, **characterised in that** the pivot fingers (42) are pivotably mounted in cartridges (46) which are fixed to the exterior of the support plates (20).

## Revendications

1. Dispositif de manipulation d'objets (8) pour les séparer d'un empilement (4) ou les assembler en un empilement (4), avec une roue d'empilage (1), à laquelle sont associés l'extrémité d'un empilement (4) des objets (8) et un dispositif d'alimentation et d'évacuation (6) pour des objets (8) individuels, et avec des fixations (18) disposées au niveau de la roue d'empilage (1) pour empiler et désempiler les objets (8), les fixations (18) comprenant des plaques de maintien (20) et des coupleurs (42) étant associés aux plaques de maintien (20), avec lesquels les plaques de maintien (20) peuvent respectivement être fixées à un objet (3), **caractérisé en ce que** des galets (24) sont reliés de manière solidaire en rotation avec les plaques de maintien (20), un élément sans fin (22), qui est aussi posé sur un galet (28) fixé au bâti et coaxial à l'axe de rotation (3) de la roue d'empilage (1), étant posé sur tous les galets (24).

2. Dispositif selon la revendication 1, **caractérisé en ce qu'**au niveau de chaque plaque de maintien (20) au moins deux doigts basculants (42) sont logés de manière basculante comme coupleurs.

3. Dispositif selon la revendication 1 ou 2, **caractérisé en ce que** la roue d'empilage (1) se compose de deux plaques (14) réalisées en particulier en forme d'étoile, les plaques de maintien (20) étant logées de manière rotative au niveau de la périphérie extérieure de la roue d'empilage (1).

4. Dispositif selon la revendication 3, **caractérisé en ce que** respectivement une plaque de maintien (20) est logée de manière rotative à l'extrémité de chaque bras d'étoile (16) des plaques (14).

5. Dispositif selon la revendication 1, **caractérisé en ce qu'**un galet tendeur (30) tournant avec la roue d'empilage (1) est associé à l'élément sans fin (22).

6. Dispositif selon la revendication 3 ou 4, **caractérisé en ce que** respectivement une plaque de maintien (20) est prévue en face des galets (24) par rapport aux bras d'étoile (16).

7. Dispositif selon l'une quelconque des revendications 1 à 6, **caractérisé en ce qu'**au moins un dispositif de levage (10, 12) pour l'empilement (4) d'objets (8) est associé à la roue d'empilage (1).

8. Dispositif selon la revendication 7, **caractérisé en ce que** le dispositif de levage présente deux tables élévatrices (10, 12).

9. Dispositif selon l'une quelconque des revendications 1 à 8, **caractérisé en ce que** le dispositif d'alimentation et d'évacuation (6) pour l'alimentation et l'évacuation d'objets (8) séparés est associé à la roue d'empilage (1) avec son extrémité à proximité de son point mort supérieur.

10. Dispositif selon l'une quelconque des revendications 1 à 9, **caractérisé en ce que** des plaques de commande (40) sont prévues pour l'actionnement des coupleurs (42).

11. Dispositif selon l'une quelconque des revendications 1 à 10, **caractérisé en ce que** les coupleurs sont des doigts basculants (42) logés au niveau des plaques de maintien (20).

12. Dispositif selon la revendication 11, **caractérisé en ce que** les plaques (40) prévues pour la commande des doigts basculants (42) possèdent des bords de contact (56), qui sont agencés d'un côté dans la zone de l'extrémité du dispositif d'alimentation et d'évacuation (6) pour des objets (8) séparés et de l'autre côté dans la zone de l'extrémité supérieure d'un empilement (4) d'objets (8).

13. Dispositif selon la revendication 11 ou 12, **caractérisé en ce que** les doigts basculants (42) prenant dans leur position active dans des ouvertures de réception (54) au niveau des surfaces latérales des objets (8) à manipuler sont chargés par des ressorts (49).

14. Dispositif selon l'une quelconque des revendications 11 à 13, **caractérisé en ce que** des butées (70) sont prévues, qui limitent le basculement des doigts basculants (42) dans leur position active.

15. Dispositif selon l'une quelconque des revendications 11 à 14, **caractérisé en ce que** les surfaces d'extrémité (60) dirigées vers le haut des doigts basculants (42) sont des surfaces partielles d'enveloppes de cylindre.

16. Dispositif selon l'une quelconque des revendications 11 à 15, **caractérisé en ce que** les surfaces (66) dirigées vers le bas des doigts basculants (42) sont incurvées de manière concave.

17. Dispositif selon l'une quelconque des revendications 11 à 16, **caractérisé en ce que** les doigts basculants (42) sont logés de manière basculante dans des cassettes (46), qui sont fixées au niveau du côté extérieur des plaques de maintien (20).
